Europäisches Patentamt

European Patent Office

Office européen des brevets

(11) Publication number: 0 336 806
A2

# EUROPEAN PATENT APPLICATION

(21) Application number: 89400774.9

(22) Date of filing: 20.03.89

(51) Int. Cl.⁴: **B 29 C 47/06**
B 29 C 47/02, B 29 C 47/28,
B 29 C 47/92, G 02 B 6/44

(30) Priority: 21.03.88 US 171376

(43) Date of publication of application:
11.10.89 Bulletin 89/41

(84) Designated Contracting States:
DE FR GB IT NL SE

(71) Applicant: ALCATEL N.V.
Strawinskylaan 341 (World Trade Center)
NL-1077 XX Amsterdam (NL)

(72) Inventor: Fleck, Michael W.
14648, Seminole Cir
Olathe KS 60062 (US)

McGuire, Michael E.
11708 W. 76 St.
Shawnee Mission KS 66214 (US)

Schneider, Randy
11708 Appaloosa Run East
Raleigh NC 27612 (US)

Cornelison, Kenneth
12700 W. 116 Street
Overland Park KS 66210 (US)

(74) Representative: Weinmiller, Jürgen et al
Lennéstrasse 9 Postfach 24
D-8133 Feldafing (DE)

(54) Simultaneous extrusion of a dual-layer buffer tube.

(57) An apparatus and process is provided which enables the simultaneous extrusion of two dissimilar materials into an improved multi-layer buffer tube. Such buffer tubes are typically used to house the optical fibers of a fiber-optic communication cable. The apparatus of the present invention includes a single crosshead assembly for simultaneously forming the plural layers of the buffer tube. As the layers are formed about optical fibers drawn through the crosshead assembly, a thixotropic material is injected into the core of the tube.

Fig.1

EP 0 336 806 A2

# Description

## BACKGROUND OF THE INVENTION

The present invention relates to a process and an apparatus for simultaneously extruding two dissimilar thermoplastic materials into a buffer tube composed of two distinct concentric layers. Such a buffer tube is typically used to surround either a single optical fiber or a group of optical fibers in a fiber-optic communications cable.

Buffer tubes are used in fiber-optic communications cables as a means of protecting the brittle glass fibers against breaking or crushing. In addition, by loosely placing the optical fibers within the tube, the entire tube configuration can be bent without kinking or breaking the fibers.

The material selected for the buffer tube constitutes an important factor in determining the final performance of the product. The tensile modulus, elongation, yield strength and chemical and moisture resistance represent a few of the key parameters used in selecting a material.

For example, materials with a high tensile modulus and yield strength are desirable when mechanical rigidity and crush resistance are necessary to protect optical fibers contained within the tube. However, because the elongation of these materials tends to be lower, there is an increased tendency for the tube to kink or break when it is bent.

The moisture absorption of particular materials can result in some materials changing in length, often in the range of a few tenths of a percent or more,. The desired tolerance for the tube length is in the range of 0.1 to 0.2%. Larger changes in length due to material effects can cause an undesirable increase in the stress placed on the fibers contained within the tube and lead to an attenuation of the signals transmitted via the fibers. Accordingly, a low value of moisture absorption is preferred in order to minimize the change in length with varying humidity conditions.

The chemical resistance of a material is also an important parameter to consider since the tube is generally in contact with filling compounds placed inside and around the tube.

Because the parameters associated with various materials are often conflicting, or the cost of the one material which meets all of the design requirements for a particular application is prohibitively high, the prior art has made use of a dual layer tube, which permits two different materials having complimentary properties to be selected. For example, tube identification is usually accomplished with color. The dual layer buffer tube process permits the outer layer to be colored, with the inner layer remaining free of any color concentrate. Use of a dual layer tube in this case can result in a lower cost product, while offering enhanced design flexibility if the inner layer material is difficult to color. A process for manufacturing dual layer buffer tubes is disclosed, for example, in U.S. Patent 4,664,472 (Mayr et al.).

Suitable materials for the inner layer of such a tube include, for example, polyamide (nylon), polyetherimid, acetal, polyester, fluoropolymers (FEP, ECTFE, etc.), ionomers, PVC, and liquid crystal polymer (LCP). Appropriate materials for the outer layer include polybutylene terepthalate (PBT), acetal, polyetherimid, polysulfone and polyester. The exact combination of materials chosen for the two layers depends on the desired tube properties and application.

In manufacturing a buffer tube, thermoplastic materials selected for forming the tube are heated to a molten state. The molten materials are then extruded into a tubular form and cooled so as to provide a solidified tubular structure.

Known prior art devices for forming the dual layer tube, such as that described in the Mayr et al. patent, have involved the use of two separate, sequentially situated crosshead assemblies. Accordingly, in the prior art device, the first layer is individually formed from a molten thermoplastic material. After leaving the first crosshead assembly in a solidified state, the second molten material is extruded by the second crosshead assembly onto the first layer.

Thermoplastic materials will shrink radially and longitudinally during the cooling stage of an extrusion process. This shrinkback can allow the outer layer to shrink on the inner layer, thus forming a tight fit.

However, because the first and second materials are not joined together at a point where both materials are in a molten state, several disadvantages result. First, the range of tube designs is limited since the designer cannot freely select the relative wall thickness of the inner and outer layers. Thin inner layers are desirable when they are formed from a high cost material. Attempting to fabricate a thin inner layer with the sequential extrusion process of the prior art results in a weak and difficult to control first layer that must be guided to the second extruder. In addition, the hollow first layer must also be formed sufficiently thick to provide structural support for the extrusion of the second layer about its circumference. Accordingly, the lower range of the thickness of the inner layer is limited. Therefore, for example, a less desirable, but more economically feasible material may have to be chosen for the first layer.

Secondly, because the second layer is sequentially extruded onto the already formed first layer, the interface (i.e., the exterior of the first layer) is exposed to the environment for possible contamination by outside dirt, moisture or other foreign matter.

## SUMMARY OF THE INVENTION

Accordingly, it is the object of the invention to overcome the deficiencies of the prior art and to provide an improved means for forming a dual layer buffer tube. In brief, an apparatus is provided which enables the simultaneous extrusion of two dissimilar materials into a dual layer buffer tube to be performed in a single crosshead.

By so doing, the designer is provided greater freedom in selecting the materials for the buffer tube layers. The simultaneous extrusion process of the present invention eliminates the problems of a thin inner layer, so as to permit a wider range of layer dimensions to be obtained. This process allows design alternatives not previously possible with sequential extrusion. That is, since the inner layer need not be guided to a second extruder, it can be more thinly constructed. Therefore, for example, a very thin inner layer can be formed when the most desirable material for use as the inner layer is relatively expensive.

The simultaneous extrusion process of the present invention also provides intimate contact between the two layers, since the first and second thermoplastic materials are joined while still in a molten state. With this process, the interface between the inner and outer layer is never exposed to the environment and cannot be contaminated by outside dirt or foreign materials.

Combining the two layers while the first and second thermoplastic materials are in a molten state also enhances the adhesion between the inner and outer layers. Materials may be used which are slightly soluble with respect to each other in order to further enhance the mechanical properties of the tube. Stronger adhesion between the layers provides the tube with better overall mechanical strength since the buffer tube acts as one solid layer instead of two separate layers. That is, because the stiffness and the crush resistance of a tube are proportional to the cube of the tube wall thickness, a mechanical advantage is gained if the two layers act as one thicker layer rather than two separate, thinner layers.

Furthermore, the adhesion and contact between the two layers is important because the buffer tube must not allow the migration of moisture along its length. Although the inner core of a buffer tube is filled with a thixotropic material to prevent moisture migration, such is not the case with the interface between the two layers forming the tube. The enhanced adhesion between the two layers in the buffer tube of the present invention inhibits such migration at the interface.


## BRIEF DESCRIPTION OF THE DRAWINGS

Other features and objects of the present invention will become more apparent from a reading of the following Detailed Description in conjunction with the drawings in which:

Figure 1 shows an arrangement of the elements of one embodiment of the present invention;

Figure 2 shows a fragmentary cross section view of the single crosshead assembly of Figure 1;

Figure 3 shows a fragmentary view "A" of the flow paths in the crosshead assembly of Figure 2.


## DETAILED DESCRIPTION

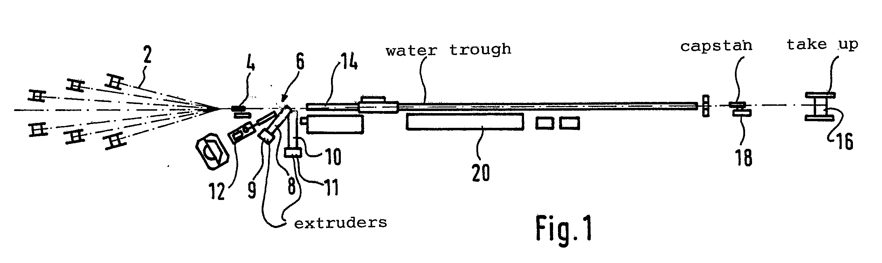

Referring now to the drawings, there is shown in Fig. 1 an apparatus for simultaneously extruding two dissimilar thermoplastic materials into a buffer tube composed of two distinct coaxial layers. In Fig. 1, optical fibers 2, which are to be used, for example, in a fiber-optic communication cable, are fed through a capstan device 4 to the extrusion assembly which includes single crosshead assembly 6. Two conventional screw extruders 8 and 10 are used to feed two thermoplastic materials into the single crosshead assembly 6. In addition, the extrusion assembly includes a grease injection pump 12. The pump 12 permits the injection of a thixotropic material into the core of the dual layer tube as it is formed. Manually settable regulators 9 and 11 permit control of the injection pressure of the two materials, respectively.

As the optical fibers are drawn into the vicinity of the crosshead assembly by take-up reel 16 and capstan 18, the simultaneous extrusion of two distinct layers of buffer tube 14 is performed. The buffer tube is formed so as to surround the optical fibers. At the same time, the thixotropic material is injected into the tube to provide a water barrier along the length of the tube. By controlling the rate at which the optical fibers are passed through the extrusion tooling relative to the rate of formation of the buffer tube, the ratio of the tube length to the fiber length can be controlled. Optimizing the excess fiber length relative to the tube length reduces the stress on the fibers which can lead to excess attenuation or breakage. This allows greater stress to be placed on the tube itself without inducing stress to the fiber. Stress to the tube may occur during bending, handling, or during subsequent manufacturing operations.

After the dual layer tube is formed in the crosshead assembly, it is drawn into a water trough 20. At the water trough, the previously molten materials used to create the tube are further cooled into a solidified state.

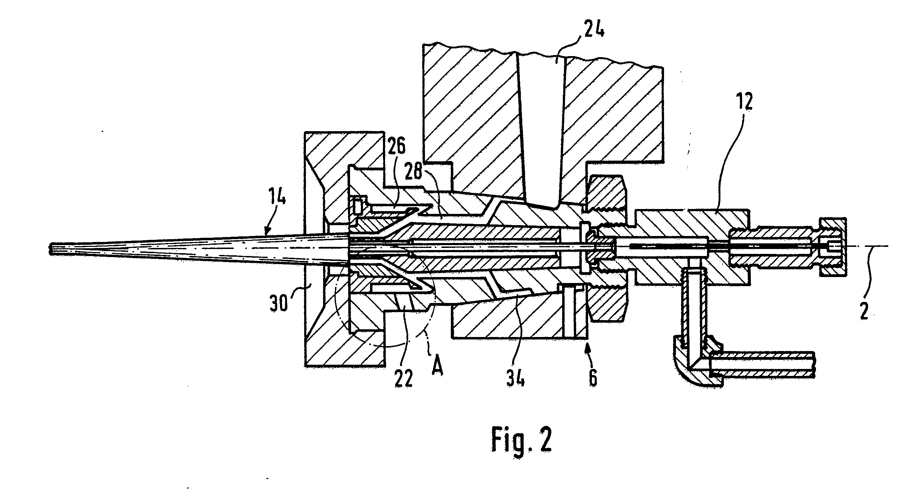

Referring now to Fig. 2, there is shown in greater detail the single crosshead assembly of the present invention. One thermoplastic material, heated to a molten state, is injected into the crosshead assembly input port 22. A second, dissimilar thermoplastic material, also heated to a molten state, is injected into a second input port 24 of the crosshead assembly 6. The first and second molten materials are injected through annular flow paths 26 and 28 respectively. The flow paths 26 and 28 are joined into a parallel relationship with one another in the crosshead so as to commonly exit the crosshead at a single annular exit port 30. With the formation of the dual layer buffer tube about the optical fiber 2 at the exit port 30, the pump 12 injects a thixotropic material into the core of the tube as described with respect to Fig. 1.

Because the crosshead assembly of the present invention joins two dissimilar materials in a molten state at the common exit port 30, the flows paths must be configured so as to insure a uniform flow of the two materials. In addition, their arrangement must ensure concentricity of the buffer tube layers.

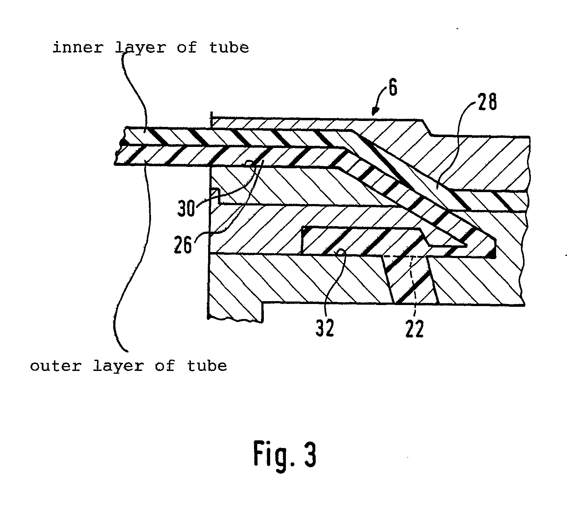

Figure 3, which represents the cut out section "A" of Fig. 2, more clearly shows the flow paths of the molten materials in the crosshead assembly of the present invention. The first molten material is injected into the first input port 22 of the crosshead at a right angle relative to the crosshead. Prior to entering the flow path 26, the material first fills an annular cavity 32. By first filling the cavity 32, a back pressure is created for the molten material in the flow path 26 which permits a more uniform flow of the material through path 26. The second input port 24 (Fig. 2) is also connected to an annular cavity 34, which serves a similar function for the flow path 28.

Regulating the back pressure in the cavities 32 and 34, by manually setting regulators 9 and 11 at desired levels, allows the flow of the materials through the paths 26 and 28 to be better controlled. Thus, the molten materials exiting the port 30 can be adjusted to provide a smooth, uniform dual layer tube.

Because the materials which are extruded into the two layers of the tube are dissimilar, they may have significantly different viscosities within the crosshead assembly. More particularly, they may have different melt temperatures. However, the crosshead assembly must be regulated at a single temperature. Consequently, one material may be well above its melt temperature while the other is close to its melt temperature. As a result, one material will become much more viscous in the crosshead than the other. In such a situation, the respective flow path for each of the materials must be appropriately sized. For example, a more viscous material may move relatively slowly through its flow path, and then surge when it reaches the exit port 30. This factor can make it difficult to provide a uniform flow of the materials in their respective flow paths, and lead to non-concentric tube layers.

Accordingly, the relative size of the flow path for each of the two dissimilar materials should be approximately proportional to the relative viscosity of the two materials. For example, a selected outer layer material that is roughly twice as viscous as the selected inner layer material for a particular temperature should be provided a flow path having a cross-sectional area that is approximately twice as large. Proper selection of the flow paths and regulation of the crosshead temperature will ensure the formation of a smooth, uniform, dual layer tube.

The relative thickness of the two layers can be controlled in the present invention by regulating the ratio of the rate at which the formed tube is drawn from the crosshead versus the input back pressure at the ports 22 and 24. That is, by decreasing the back pressure at the crosshead input ports and by increasing the take-up rate of the buffer tube, less material is available at the exit port 30. Accordingly, the layer thicknesses would decrease. By slowing the take-up of the formed buffer tube and by increasing back pressure, thicker tube layers would be formed. Increasing the back pressure of one material relative to that of the other would increase the relative thickness of the layer formed by that material.

As was previously noted, material selection is an important factor in the design of a dual layer buffer tube. In the simultaneous extrusion process of the present invention, consideration should be given to the relative melt temperatures of the two materials selected to ensure that they are compatible. That is, because the two materials are heated in the flow paths of a single crosshead assembly, their melt temperatures should be relatively close in range. Two materials that are suitable for use in the present application are polybutylene terepthalate (PBT) and a polyamid (Nylon 12). The PBT offers a high Young's modulus of approximately 330,000 psi at room temperature, very low moisture absorption and good chemical resistance. However, this material yields at relatively low elongation and is therefore sensitive to kinking when used alone.

The nylon 12 offers a good Young's modulus of approximately 150,000 psi at room temperature and excellent mechanical properties. This material has a comparatively linear stress/strain relationship which offers good resistance to kinking.

As is clear from the foregoing description, the apparatus and process of the present invention permits the simultaneous extrusion of two dissimilar materials into an improved dual layer buffer tube. With the single crosshead assembly of the present invention, greater flexibility in selecting the thickness of each layer is provided. Accordingly, the designer is permitted greater latitude in the selection of materials used for the buffer tube because of the design flexibility.

In addition, the simultaneous extrusion of the present invention provides intimate contact between the two layers of the tube and enhances the adhesion of the layers to one another at the interface. Because the dual layers are simultaneously extruded, contamination of the interface does not occur.

It should be noted that the tooling of the present invention can be easily adapted to fabricate a wide range of tube sizes. Commonly used tube sizes range from 1-4 millimeters in diameter, and contain any number of optical fibers in each tube. The single crosshead assembly could also be designed in accordance with the teachings of the present invention to permit the simultaneous extrusion of more than two layers (e.g., a four layer tube).

Although the present invention has been fully described by way of example with reference to the accompanying drawings, it should be noted that various changes and modifications will be apparent to those skilled in the art. Therefore, unless such changes and modifications depart from the scope of the present invention, they should be construed as being included therein.

**Claims**

1. An apparatus for extruding two dissimilar materials into a buffer tube configuration comprising:
means for providing a supply of a first thermoplastic material in a molten state to a single crosshead assembly means;
means for separately providing a supply of a second dissimilar thermoplastic material in a molten state to said single crosshead assembly means; and
means for controlling said single crosshead assembly means to combine said first and second dissimilar materials into a buffer tube configuration composed of two distinct concentric layers which are in intimate contact with one another.

2. Apparatus according to claim 1, further comprising:
means for injecting an amount of filling material into said buffer tube.

3. Apparatus according to claim 2, wherein said filling material is a thixotropic material.

4. Apparatus according to claim 2, further comprising means for receiving a length of an optical fiber such that said buffer tube configuration surrounds said optical fiber.

5. Apparatus according to claim 4, wherein the length of the optical fiber received, and the amount of filling material injected are simultaneously regulated by said means for controlling during said combining of the first and second dissimilar materials.

6. Apparatus according to claim 4, wherein said buffer tube surrounds a plurality of optical fibers.

7. Apparatus according to claim 1, wherein said first material is polybutylene terepthalate and said second material is polyamide.

8. Apparatus according to claim 1, wherein said buffer tube size ranges from 1-4 mm.

9. Process for extruding two dissimilar materials into a buffer tube configuration comprising the steps of:
supplying a first material in a molten state to a single crosshead assembly means;
supplying a second, dissimilar material in a molten state to said single crosshead assembly means; and,
combining said first and second material in said single crosshead assembly into a buffer tube configuration composed of two distinct concentric layers, wherein said two layers are in intimate contact.

10. Process for extruding two dissimilar materials into a buffer tube configuration comprising the steps of:
controlling a supply of a first material in a molten state to a single crosshead assembly;
controlling a supply of a second, material in a molten state to said single crosshead assembly;
combining said first and second material in said single crosshead assembly into a buffer tube configuration composed of two distinct concentric layers, wherein said two layers are in intimate contact; and,
injecting a thixotropic material into said buffer tube,
wherein said steps controlling, combining and injecting are performed simultaneously.

11. The process of claim 10, further comprising a step of selecting first and second materials having different viscosities.

12. The process of claim 10, wherein said step of combining further comprises simultaneously injecting an amount of thixotropic material into said buffer tube.

13. The process of claim 12, wherein said step of combining further comprises simultaneously inputting a length of optical fiber into said crosshead assembly, whereby said buffer tube configuration is formed around said optical fibers.

14. A product produced by a process for extruding two dissimilar materials into a buffer tube configuration, wherein said process comprises the steps of:
supplying a first material in a molten state of a single crosshead assembly means;
supplying a second, dissimilar material in a molten state to said single crosshead assembly means; and,
combining said first and second material in said single crosshead assembly into a buffer tube configuration composed of two distinct concentric layers, wherein said two layers are in intimate contact.

15. A single crosshead assembly means for extruding two dissimilar materials into a buffer tube configuration comprising:
a first input port for receiving a first thermoplastic material in a molten state;
a second input port for receiving a second dissimilar thermoplastic material in a molten state, said first input port and said second input port being connected to first and second annular flow paths, respectively; and,
a single output port,
whereby said first and second materials are brought into intimate contact within said single crosshead assembly, for concurrent extrusion through said single output port so as to form a dual layer buffer tube, with one layer of said tube being formed of said first material, and another layer being formed of said second material.

16. A single crosshead assembly means according to claim 15, wherein
said first and second flow paths further comprise annular cavities at an end close to said input ports for storing an initial amount of said first and second materials respectively,
whereby a back pressure is created in said first and second flowpaths.

17. A single crosshead assembly means according to claim 16, wherein the relative size of said first flow path to said second flow path is approximately proportional to the relative viscosity of the materials injected into said first and second flow paths.

18. A single crosshead assembly means according to claim 16, further comprising control means whereby the relative thicknesses of said dual layers is controlled by simultaneously regulating both a rate at which the buffer tube is extruded and the back pressure in said first and second flow paths.

Fig.1

water trough    capstan    take up

extruders

EP 0 336 806 A2

Fig. 2

inner layer of tube

6
28
30
26
outer layer of tube
32    22

# Fig. 3